# EUROPÄISCHE PATENTANMELDUNG

(11) **EP 2 383 090 A1**
(43) Veröffentlichungstag der Anmeldung: **02.11.2011**
(21) Anmeldenummer: 11160634.9
(22) Anmeldetag: 31.03.2011
(51) Int. Cl.: B29B 17/02

(54) **Verfahren und Vorrichtung zur Entfernung der ringförmigen Stahleinlagen in Reifenwulsten von Fahrzeugreifen**

(30) Priorität: 29.04.2010 DE 102010028370
(71) Anmelder: Alba Nordbaden GmbH, 76189 Karlsruhe (DE)
(72) Erfinder: Marinkovic, Goran, 76676 Graben-Neudorf (DE)
(74) Vertreter: Müller, Wolfram Hubertus

(57) **Zusammenfassung**

Die Erfindung betrifft ein Verfahren und eine Vorrichtung zur Entfernung der ringförmigen Stahleinlagen in Reifenwulsten von Fahrzeugreifen. Um die Entfernung der Stahleinlagen von Reifenwulsten von Fahrzeugreifen rationeller zu gestalten und eine Weiterverwertung der Stahleinlage zu ermöglichen, ist erfindungsgemäß vorgesehen, dass die Reifenwulste (18) durch Zugbeanspruchung von den Fahrzeugreifen (17) abgetrennt werden und dass anschließend der an den Stahleinlagen (19) anhaftende Gummi von den Reifenwulsten (18) abgeschert und/oder abgeschnitten wird.

## Beschreibung

Die Erfindung betrifft ein Verfahren zur Entfernung der ringförmigen Stahleinlagen in Reifenwulsten von Fahrzeugreifen nach dem Oberbegriff des Anspruchs 1 und eine Vorrichtung zur Entfernung der Stahleinlagen in Reifenwulsten von Fahrzeugreifen nach dem Oberbegriff des Anspruchs 6.

In Deutschland fallen jährlich knapp 600.000 Tonnen, europaweit über 3 Millionen Tonnen Altreifen an. Durch nationale und EU-weite Verbote der Entsorgung von Altreifen auf Deponien sowie durch steigende Preise für Naturkautschuk gewinnen das Recycling und die stoffliche Aufbereitung von Gummi an Bedeutung. Dazu kommt vor dem Hintergrund gestiegener Energiepreise eine derzeit sehr hohe Nachfrage nach Altreifen als Ersatzbrennstoff (z. B. in Zementwerken). Zum Einsatz in der Verbrennung oder Wiederaufbereitung und zur Optimierung der Logistik werden PKW- oder LKW-Reifen in der Regel auf eine bestimmte Korngröße zerkleinert. Hierfür werden vorwiegend Zweiwellen-Shredder verwendet.

Die Praxis zeigt, dass die Zerkleinerung kompletter Altreifen einen großen Verschleiß an den Shreddermessern verursacht. Ursache dafür ist der in Reifen verarbeitete Stahl insbesondere im Reifenwulst. Hinzu kommt dass diese Reifenwulstringe die Shredderanlagen blockieren können und damit Ausfallzeiten verursachen. Ein Problem stellt dabei der hohe Stahlanteil, insbesondere in Niederquerschnitt- oder LKW-Reifen, dar.

Stahl dient der Stabilisierung des Reifens und ist in Form von Lagen aus feinen Stahldrähten im Bereich der Laufflächen und der Seitenwände sowie in zwei ringförmigen und beidseitig an den Felgen anliegenden Wülsten vorhanden. Diese Wulstringe sind in LKW-Reifen bis zu 25 mm stark und enthalten besonders widerstandsfähigen Federstahl. Insbesondere diese Wulstringe verursachen sowohl in Vorzerkleinerern als auch in nachgeordneten Zerkleinerungsmaschinen einen erheblichen Verschleiß.

Anlagenbetreiber beziffern den Anteil am Verschleiß durch Wulstringe, die nur 10 % des Gewichtes eines LKW-Reifens ausmachen, auf bis zu 70 %. Deshalb ist es wirtschaftlich, die Wulstringe vor der Zerkleinerung zu entfernen.

Sofern der Reifenwulst vor der Zerkleinerung entfernt wird, geschieht dies in der Praxis bisher durch zeitaufwändige manuelle Verfahren. Dabei wird der Wulst mit Messern zusammen mit dem anhaftenden Gummi aus dem Reifen herausgeschnitten. Nachteil dieses Verfahrens ist, dass es zu langsam und arbeitsaufwändig ist und dem Wulst zu viel Gummi anhaftet, so dass er nicht mehr als Stahlschrott vermarktet werden kann.

Der Erfindung liegt deshalb die Aufgabe zugrunde, die Entfernung der Stahleinlage von Reifenwulsten von Fahrzeugreifen rationeller zu gestalten und eine Weiterverwertung der Stahleinlage zu ermöglichen.

Erfindungsgemäß wird das gemäß den Merkmalen der Ansprüche 1 und 6 ermöglicht.

Ein Verfahren zur Entfernung der ringförmigen Stahleinlagen in Reifenwulsten von Fahrzeugreifen ist erfindungsgemäß dadurch gekennzeichnet, dass die Reifenwulste durch Zugbeanspruchung von den Fahrzeugreifen abgetrennt werden und dass anschließend der an den Stahleinlagen anhaftende Gummi von den Reifenwulsten abgeschert oder abgeschnitten wird.

Ein Vorteil dieses Verfahrens besteht darin, dass der Reifenwulst mit hoher Geschwindigkeit vom Fahrzeugreifen getrennt wird und dass anschließend mit der gleichen hohen Geschwindigkeit der Gummi von der Stahleinlage abgeschert oder abgeschnitten wird. Die dabei an der Stahleinlage noch anhaftenden geringen Gummireste stellen bei der weiteren Verarbeitung in Stahlwerken kein Problem dar. Die Reifenwulste können nach der Entfernung der Stahleinlagen anschließend problemlos in herkömmlichen Shredderanlagen weiter zerkleinert werden. Somit wird eine höhere Geschwindigkeit bei der Zerkleinerung von Altreifen ermöglicht, der Verschleiß der Shreddermesser wird reduziert und es wird eine wirtschaftlichere Weiterverarbeitung der Rohstoffe ermöglicht.

Eine bevorzugte Verfahrensvariante ist dadurch gekennzeichnet, dass der Reifenwulst der einen Seite des Fahrzeugreifens auf eine Vorrichtung gehängt wird, dass anschließend der Reifenwulst durch Zugbeanspruchung der Aufhängevorrichtung von dem an einer festen Anlage anliegenden Fahrzeugreifen abgetrennt wird und dass der Reifenwulst zusammen mit dieser Aufhängevorrichtung durch eine Scher- und/oder Schneidvorrichtung gezogen wird, in der an der Stahleinlage des Reifenwulst anhaftender Gummi abgeschoren wird, dass nach der kompletten Entfernung des Reifenwulst der einen Seite des Fahrzeugreifens die Aufhängevorrichtung in ihre Ausgangslage zurückgebracht wird, der Reifenwulst der anderen Seite des Fahrzeugreifens auf die Aufhängevorrichtung gehängt wird und der beschriebene Vorgang der Trennung des Reifenwulst vom Fahrzeugreifen und des Abscherens des Gummis von der Stahleinlage wiederholt wird.

Der bei diesem Verfahren durch Zugbeanspruchung kontinuierlich vom Fahrzeugreifen abgetrennte Reifenwulst wird vor oder in der Scher- oder Schneidvorrichtung so zusammengequetscht, dass er eine Schlaufe bildet. Diese Schlaufe wird durch die Scher- und oder Schneidvorrichtung gezogen, in der die ringförmige Stahleinlage vom Gummi befreit wird, so dass nach Abschluss dieses Vorganges nur noch die als Schlaufe zusammengedrückte Stahleinlage an der Aufhängevorrichtung hängt. Der ausgelöste Reifenwulst fliegt nach hinten in Zugrichtung und der Reifen fällt außen herunter.

Nachdem die Reifen von beiden Reifenwulsten befreit worden sind, können sie in herkömmlichen Pressen, z.B. in Papier- oder Kartonagepressen, verpresst und damit ohne Zerkleinerung für den Transport zur Weiterverarbeitung an einem anderen Ort optimiert werden.

Die Aufhängevorrichtung mit dem Reifenwulst wird während des Trennvorganges über eine Zugstrecke gezogen, die mindestens dem halben Umfang des Fahrzeugreifens entspricht. Dadurch kann ein Reifenwulst in einem Arbeitsgang vom Fahrzeugreifen getrennt und die Stahleinlage vom Gummi befreit werden.

Die Aufhängevorrichtung mit dem Reifenwulst wird während des Trennvorganges vorzugsweise mit einer gleichmäßigen Zugkraft gezogen.

Die Zugkraft beträgt bei der Verarbeitung von PKW-Reifen vorzugsweise 90 bis 95 KN.

Eine Vorrichtung zur Entfernung der ringförmigen Stahleinlagen in Reifenwulsten von Fahrzeugreifen ist dadurch gekennzeichnet, dass eine Aufhängevorrichtung zur Aufnahme einer Reifenwulst eines Fahrzeugreifens vorgesehen ist, wobei die Aufhängevorrichtung durch eine Schervorrichtung und/oder Schneidvorrichtung greift und mit einer Zugvorrichtung für den Transport der Aufhängevorrichtung mit dem Reifenwulst durch die Schervorrichtung und/oder Schneidvorrichtung verbunden ist.

Eine bevorzugte Ausführungsform der Vorrichtung ist dadurch gekennzeichnet, dass die Schervorrichtung eine Öffnung für den Durchgriff der Aufhängevorrichtung aufweist, dass seitlich der Öffnung mit dieser verbundene Schneidspalte vorgesehen sind und dass die Kanten, die die Schneidspalte mit der Öffnung bilden, als geschärfte Kanten ausgebildet sind. Die Scherwirkung erfolgt über die definierten Schneidspalte.

Die Aufhängevorrichtung weist vorzugsweise mindestens einen Haken auf, auf den jeweils ein Reifenwulst des Fahrzeugreifens aufgehängt wird. In der Ausgangsstellung ragt der Haken einige Zentimeter aus der Schervorrichtung heraus, so dass ein Reifenwulst aufgehängt werden kann.

Der Haken besteht vorzugsweise aus Stahl ST 52 und die Schervorrichtung vorzugsweise aus Hardox HB 400 da diese beiden Baugruppen hohen Beanspruchungen ausgesetzt sind.

Zur Erzielung der Zugbeanspruchung ist die Aufhängevorrichtung vorzugsweise mit einer Kolbenstange einer hydraulischen Zugvorrichtung verbunden.

Die Aufhängevorrichtung ist vorzugsweise auf einem Führungsschlitten angeordnet, der vertikal und horizontal geführt ist. Dadurch ist gewährleistet, dass der Führungsschlitten immer gleichmäßig waagerecht geführt wird und dass die Zugkraft kontinuierlich in die gleiche Richtung wirkt.

Für die Führung sind vertikal und horizontal angeordnete Rollen vorgesehen, denen stationäre Führungsbahnen zugeordnet sind.

Vorzugsweise ist die Schervorrichtung in einer Platte angeordnet, die auch als Anlage für den Fahrzeugreifen während der Entfernung der Stahleinlagen ausgebildet ist.

Die Erfindung soll in einem Ausführungsbeispiel an Hand von Zeichnungen erläutert werden.

Es zeigen:
- Fig.1: eine perspektivische Ansicht einer Aufhängevorrichtung mit zugehöriger Schervorrichtung;
- Fig.2: die Baugruppen der Fig.1 in einer Seitenansicht;
- Fig.3: die Baugruppen der Fig.1 in einer Vorderansicht;
- Fig.4: einen Führungsschlitten mit Aufhängevorrichtung in einer Seitenansicht;
- Fig.5: den Führungsschlitten nach Fig. 4 in einer Vorderansicht;
- Fig.6: den Führungsschlitten mit Aufhängevorrichtung in einer perspektivischen Ansicht;
- Fig.7: den Führungsschlitten mit Aufhängevorrichtung und aufgehängtem Fahrzeugreifen in der Ausgangsstellung;
- Fig.8: die Baugruppen nach Fig. 7 während der Entwulstung des Fahrzeugreifens.

Bei den Figuren handelt es sich um nicht maßstabsgerechte schematische Darstellungen.

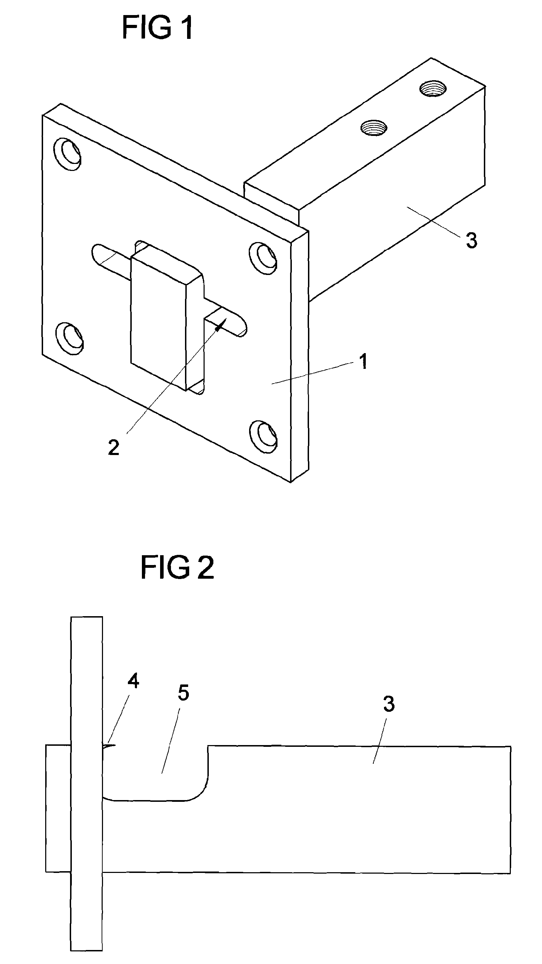

Die Fig.1 zeigt eine perspektivische Ansicht einer Platte 1, die eine Schervorrichtung 2 aufweist. Weiterhin ist eine Aufhängevorrichtung 3 für einen Fahrzeugreifen vorgesehen, die durch die Schervorrichtung greift. Wie aus der Fig. 2 ersichtlich ist, weist die Aufhängevorrichtung einen Haken 4 auf, dem sich eine Ausnehmung 5 für die Aufnahme der Reifenwulst des Fahrzeugreifens anschließt.

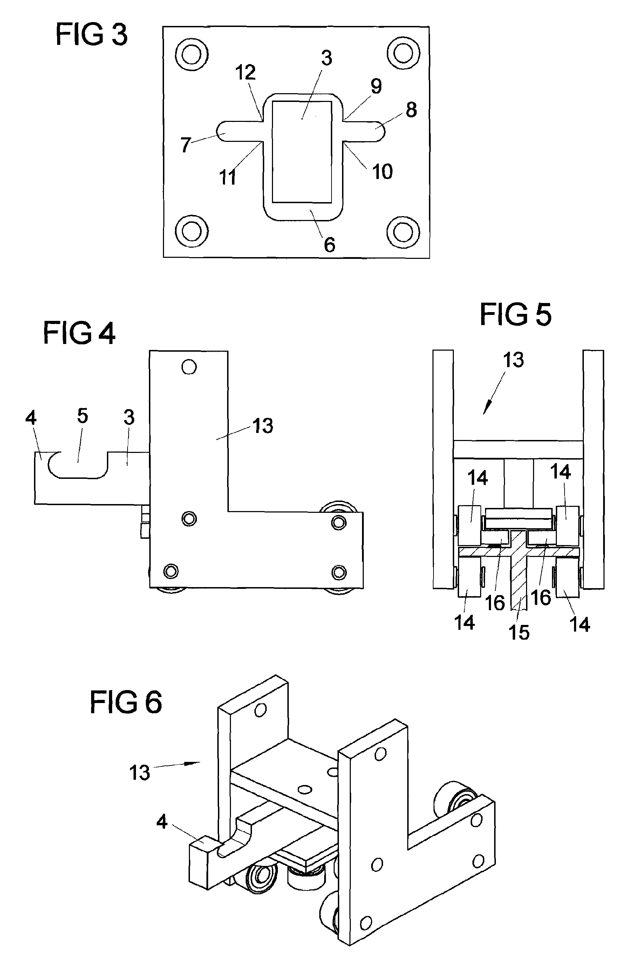

Die Fig. 3 zeigt die Platte 1 mit der Schervorrichtung 2 detaillierter. Die Platte 1 weist eine Öffnung 6 auf, durch die die Aufhängevorrichtung 3 greifen kann, wie es auch aus den Figuren 1 und 2 ersichtlich ist. Seitlich dieser Öffnung sind Schneidspalte 7 und 8 vorgesehen. Die Öffnung 6 und die Schneidspalte 7 und 8 weisen Kanten 9, 10, 11 und 12 auf, die die Schneidkanten für das Abscheren des Gummis von den Stahleinlagen der Reifenwulste darstellen.

Die Figuren 4 bis 6 zeigen einen Führungsschlitten 13, an dem die Aufhängevorrichtung 3 befestigt ist. der Führungsschlitten weist horizontal gelagerte Rollen 14 auf, die im Zusammenwirken mit einer stationären Führungsbahn 15 dafür sorgen, dass beim Ziehen des Führungsschlittens 13 auftretende vertikale Kräfte aufgenommen werden. Weiterhin sind vertikal gelagerte Rollen 16 vorgesehen, die im Zusammenwirken mit der stationären Führungsbahn 15 dafür sorgen, dass beim Ziehen des Führungsschlittens 13 auftretende horizontale Kräfte aufgenommen werden. Diese Führung gewährleistet, dass der Führungsschlitten immer gleichmäßig waagerecht geführt wird und dass die Zugkraft kontinuierlich in die gleiche Richtung wirkt.

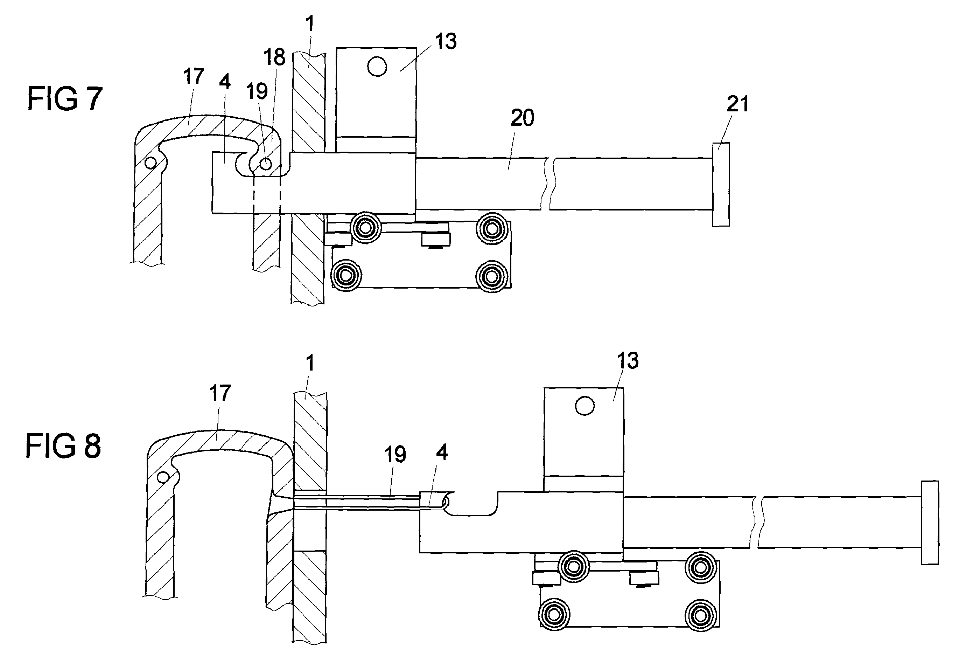

Die Fig. 7 zeigt den Führungsschlitten 13 in der Ausgangsstellung. In dieser Stellung greift der Haken 4 der Aufhängvorrichtung 3 durch die Platte 1, so dass ein Fahrzeugreifen 17 mit einem Reifenwulst 18 auf den Haken 4 gehängt werden kann. Der Reifenwulst 18 weist eine Stahleinlage 19 auf.

Die Aufhängevorrichtung 3 ist mit einer Kolbenstange 20 verbunden, die einen Kolben 21 einer nicht dargestellten hydraulischen Zugvorrichtung aufweist.

In der Fig. 8 ist die Stellung des Führungsschlittens 13 während der Entwulstung dargestellt. Am Haken 4 hängt die ringförmige Stahleinlage 19, die nach der Entwulstung durch den Ziehvorgang zu einer Schlaufe verformt worden ist, wie aus der Fig. 8 ersichtlich ist. Der Fahrzeugreifen 17 wird während der Entwulstung infolge der Zugbeanspruchung gegen die Platte 1 gezogen.

Nachdem die Stahleinlage aus dem Fahrzeugreifen entfernt worden ist, fällt der Fahrzeugreifen zu Boden. Das ist in den Figuren nicht dargestellt worden. Die schlaufenförmige Stahleinlage 19 wird vom Haken 4 entnommen. Danach wird der Führungsschlitten 13 mit der Aufhängevorrichtung 3 in die Ausgangsposition zurückgebracht und der zweite Reifenwulst des Fahrzeugreifens wird auf den Haken 4 gehängt, was ebenfalls nicht dargestellt worden ist. Danach wiederholt sich der vorher beschriebene Vorgang der Entwulstung.

Nachdem beide Stahleinlagen aus dem Fahrzeugreifen entfernt worden sind, können die entwulsten Fahrzeugreifen in herkömmlichen Pressen verpresst werden und damit ohne weitere Zerkleinerung für den Abtransport optimiert werden. Die Stahleinlagen können als Stahlschrott problemlos in Stahlwerken verwendet werden. Dabei sind geringe Gummireste an den Stahleinlagen unproblematisch.

### Bezugszeichenliste

- 1: Platte
- 2: Schervorrichtung
- 3: Aufhängevorrichtung
- 4: Haken
- 5: Ausnehmung
- 6: Öffnung
- 7: Schneidspalt
- 8: Schneidspalt
- 9: Kante
- 10: Kante
- 11: Kante
- 12: Kante
- 13: Führungsschlitten
- 14: Horizontal gelagerte Rollen
- 15: Stationäre Führungsbahn
- 16: Vertikal gelagerte Rollen
- 17: Fahrzeugreifen
- 18: Reifenwulst
- 19: Stahleinlage
- 20: Kolbenstange
- 21: Kolben

## Patentansprüche

1. Verfahren zur Entfernung der ringförmigen Stahleinlagen in Reifenwulsten von Fahrzeugreifen, **dadurch gekennzeichnet, dass** die Reifenwulste durch Zugbeanspruchung von den Fahrzeugreifen abgetrennt werden und dass anschließend der an den Stahleinlagen anhaftende Gummi von den Reifenwulsten abgeschert und/oder abgeschnitten wird.

2. Verfahren nach Anspruch 1, **dadurch gekennzeichnet, dass** der Reifenwulst der einen Seite des Fahrzeugreifens auf eine Vorrichtung gehängt wird, dass anschließend der Reifenwulst durch Zugbeanspruchung der Aufhängevorrichtung von dem an einer festen Anlage anliegenden Fahrzeugreifen abgetrennt wird und dass der Reifenwulst zusammen mit dieser Aufhängevorrichtung durch eine Scher- und/oder Schneidvorrichtung gezogen wird, in der an der Stahleinlage des Reifenwulst anhaftender Gummi abgeschoren wird, dass nach der kompletten Entfernung des Reifenwulst der einen Seite des Fahrzeugreifens die Aufhängevorrichtung in ihre Ausgangslage zurückgebracht wird, der Reifenwulst der anderen Seite des Fahrzeugreifens auf die Aufhängevorrichtung gehängt wird und der beschriebene Vorgang der Trennung des Reifenwulst vom Fahrzeugreifen und des Abscherens des Gummis von der Stahleinlage wiederholt wird.

3. Verfahren nach Anspruch 1 oder 2, **dadurch gekennzeichnet, dass** die Aufhängevorrichtung mit dem Reifenwulst während des Trennvorganges über eine Zugstrecke gezogen wird, die mindestens dem halben Umfang des Fahrzeugreifens entspricht.

4. Verfahren nach mindesten einem der vorhergehenden Ansprüche, **dadurch gekennzeichnet, dass** die Aufhängevorrichtung mit dem Reifenwulst während des Trennvorganges mit einer gleichmäßigen Zugkraft gezogen wird.

5. Verfahren nach mindestens einem der vorhergehenden Ansprüche, **dadurch gekennzeichnet, dass** die Zugkraft bei der Verarbeitung von PKW-Reifen 90 bis 95 KN beträgt.

6. Vorrichtung zur Entfernung der ringförmigen Stahleinlagen in Reifenwulsten von Fahrzeugreifen, **dadurch gekennzeichnet, dass** eine Aufhängevorrichtung (3) zur Aufnahme einer Reifenwulst (18) eines Fahrzeugreifens (17) vorgesehen ist, wobei die Aufhängevorrichtung (3) durch eine Schervorrichtung (2) und/oder Schneidvorrichtung greift und mit einer Zugvorrichtung (13, 20,21) für den Transport der Aufhängevorrichtung (3) mit dem Reifenwulst (18) durch die Schervorrichtung (2) und/oder Schneidvorrichtung verbunden ist.

7. Vorrichtung nach Anspruch 6, **dadurch gekennzeichnet, dass** die Schervorrichtung (2) eine Öffnung (6) für den Durchgriff der Aufhängevorrichtung (3) aufweist, dass seitlich der Öffnung (6) mit dieser verbundene Schneidspalte (7, 8) vorgesehen sind und dass die Kanten (9, 10, 11, 12), die die Schneidspalte (8) mit der Öffnung (6) bilden, als geschärfte Kanten ausgebildet sind.

8. Vorrichtung nach Anspruch 6 oder 7, **dadurch gekennzeichnet, dass** die Aufhängevorrichtung (3) mindestens einen Haken (4) aufweist.

9. Vorrichtung nach Anspruch 8, **dadurch gekennzeichnet, dass** der Haken (4) aus Stahl ST 52 besteht.

10. Vorrichtung nach mindestens einem der Ansprüche 6 bis 9, **dadurch gekennzeichnet, dass** die Schervorrichtung (2) aus Hardox HB 400 besteht.

11. Vorrichtung nach mindestens einem der Ansprüche 6 bis 10, **dadurch gekennzeichnet, dass** die Aufhängevorrichtung (3) mit einer Kolbenstange (20) einer hydraulischen Zugvorrichtung verbunden ist.

12. Vorrichtung nach mindestens einem der Ansprüche 6 bis 11, **dadurch gekennzeichnet, dass** die Aufhängevorrichtung (3) auf einem Führungsschlitten (13) angeordnet ist.

13. Vorrichtung nach Anspruch 12, **dadurch gekennzeichnet, dass** der Führungsschlitten (13) vertikal und horizontal geführt ist.

14. Vorrichtung nach Anspruch 13, **dadurch gekennzeichnet, dass** für die Führung vertikal und horizontal gelagerte Rollen (16, 14) vorgesehen sind, denen stationäre Führungsbahnen (15) zugeordnet sind.

15. Vorrichtung nach mindestens einem der Ansprüche 6 bis 14, **dadurch gekennzeichnet, dass** die Schervorrichtung (2) in einer Platte (1) angeordnet ist, die auch als Anlage für den Fahrzeugreifen (17) während der Entfernung der Stahleinlagen (19) ausgebildet ist.
